# EUROPEAN PATENT APPLICATION

(11) **EP 3 076 696 A1**
(43) Date of publication of application: **05.10.2016**
(21) Application number: 14864493.3
(22) Date of filing: 20.11.2014
(51) Int. Cl.: H04W 12/12, H04W 4/00, H04W 48/08, H04W 84/12, H04W 88/06, H04W 88/18

(54) **COMMUNICATION CONTROL METHOD, USER TERMINAL, AND PROCESSOR**

(30) Priority: 25.11.2013 JP 2013242927
(71) Applicant: Kyocera Corporation, Kyoto-shi, Kyoto 612-8501 (JP)
(72) Inventor: TACHIKAWA, Hitoya, Kyoto-shi Kyoto 612-8501 (JP)
(74) Representative: Schwabe - Sandmair - Marx
(86) International application number: PCT/JP2014/080805
(87) International publication number: WO 2015/076345

(57) **Abstract**

A communication control method includes: a step in which a UE 100 acquires an identifier of an AP 300 that can be trusted, from a cellular-side server 400 of a cellular network; a step in which the UE 100 performs a WLAN connection procedure including authentication processing required for a WLAN connection for detected AP 300, in response to the UE 100 detecting the AP 300 corresponding to the identifier; and a step in which the UE 100 notifies the cellular-side server 400 of report information relating to the detected AP 300, in response to failure of the authentication processing in the WLAN connection procedure.

## Description

### TECHNICAL FIELD

The present invention relates to a communication control method, a user terminal, and a processor used in a cellular communication system that can be interworked with a wireless LAN system.

### BACKGROUND ART

In recent years, user terminals (so-called dual terminals) having both communication systems of cellular communication and wireless LAN (Wireless Local Area Network: WLAN) communication have become popular. In addition, the number of WLAN access points managed by an operator of a cellular communication system has been increased.

Thus, in a 3GPP (3rd Generation Partnership Project) that is a standardization project of cellular communication systems, a technology for enhancing interworking between a cellular RAN (Radio Access Network) and a WLAN has been studied.

For example, the traffic load of the cellular RAN can be decreased (off-load) by performing switching such that the traffic of a user terminal accommodated by the cellular RAN is switched to the WLAN.

### CITATION LIST

### NON PATENT LITERATURE

Non Patent Literature 1: 3GPP Technical Report "TR 37.834 V1.0.0", August 2013

### SUMMARY OF INVENTION

However, differently from a cellular base station, a WLAN access point can be installed relatively freely, and thus, there is concern that a "spoofing WLAN access point" is installed for intercepting a communication content of a user terminal. It is not desirable to leave a "spoofing WLAN access point" from the viewpoint of securing the confidentiality of communication.

Thus, an object of the present invention is to enable the securement of confidentiality of communication even when a cellular RAN is interworked with a WLAN.

A communication control method according to a first aspect includes: a step A in which a user terminal acquires an identifier of a WLAN access point that can be trusted, from a network apparatus of a cellular network; a step B in which the user terminal performs a WLAN connection procedure including authentication processing required for a WLAN connection for detected WLAN access point, in response to the user terminal detecting the WLAN access point corresponding to the identifier; and a step C in which the user terminal notifies the network apparatus of report information relating to the detected WLAN access point, in response to failure of the authentication processing in the WLAN connection procedure.

A user terminal according to a second aspect includes a controller configured to acquire an identifier of a WLAN access point that can be trusted, from a network apparatus of a cellular network. The controller performs a WLAN connection procedure including authentication processing required for a WLAN connection for detected WLAN access point in response to the controller detecting the WLAN access point corresponding to the identifier. The controller notifies the network apparatus of report information relating to the detected WLAN access point in response to failure of the authentication processing in the WLAN connection procedure.

A processor according to a third aspect is to be equipped in a user terminal configured to acquire an identifier of a WLAN access point that can be trusted from a network apparatus of a cellular network. The processor is configured to perform the processes of: performing a WLAN connection procedure including authentication processing required for a WLAN connection for detected WLAN access point, in response to the user terminal detecting the WLAN access point corresponding to the identifier; and notifying the network apparatus of report information relating to the detected WLAN access point, in response to failure of the authentication processing in the WLAN connection procedure.

### BRIEF DESCRIPTION OF DRAWINGS

Fig. 1 is a diagram of the configuration of a system according to an embodiment.
Fig. 2 is a block diagram of a UE according to an embodiment.
Fig. 3 is a block diagram of an eNB according to an embodiment.
Fig. 4 is a block diagram of a cellular-side server according to an embodiment.
Fig. 5 is a diagram of a protocol stack of a radio interface in LTE.
Fig. 6 is a diagram illustrating traffic steering.
Fig. 7 is a diagram illustrating the operation sequence according to an embodiment.

### DESCRIPTION OF EMBODIMENTS

### [Overview of Embodiments]

A communication control method according to an embodiment includes: a step A in which a user terminal acquires an identifier of a WLAN access point that can be trusted, from a network apparatus of a cellular network; a step B in which the user terminal performs a WLAN connection procedure including authentication processing required for a WLAN connection for detected WLAN access point, in response to the user terminal detecting the WLAN access point corresponding to the identifier; and a step C in which the user terminal notifies the network apparatus of report information relating to the detected WLAN access point, in response to failure of the authentication processing in the WLAN connection procedure.

In an embodiment, in the step A, the user terminal further acquires WLAN authentication information used in the authentication processing, from the network apparatus. In the step B, the user terminal uses the WLAN authentication information acquired from the network apparatus for the authentication processing.

In an embodiment, the network apparatus manages information relating to the WLAN access point that can be trusted. The communication control method further includes a step D in which the network apparatus receiving the report information updates the managed information based on the received report information.

In the step D, the network apparatus updates the managed information to exclude the detected WLAN access point.

In an embodiment, the report information includes at least one of an identifier of the detected WLAN access point, WLAN authentication information used in the authentication processing for the detected WLAN access point, and an authentication scheme used for the authentication processing for the detected WLAN access point.

In an embodiment, the report information further includes at least one of location information relating to a geographical location of the detected WLAN access point and time information relating to authentication failure time for the detected WLAN access point.

In an embodiment, the step C includes a step C1 in which the user terminal that does not have a connection with the cellular network stores the report information at the time of an authentication failure for the detected WLAN access point, and a step C2 in which the user terminal notifies the network apparatus of the stored report information after the user terminal connects to the cellular network.

A user terminal according to an embodiment includes a controller configured to acquire an identifier of a WLAN access point that can be trusted, from a network apparatus of a cellular network. The controller performs a WLAN connection procedure including authentication processing required for a WLAN connection for detected WLAN access point in response to the controller detecting the WLAN access point corresponding to the identifier. The controller notifies the network apparatus of report information relating to the detected WLAN access point in response to failure of the authentication processing in the WLAN connection procedure.

A processor according to an embodiment is to be equipped in a user terminal configured to acquire an identifier of a WLAN access point that can be trusted from a network apparatus of a cellular network. The processor is configured to perform the processes of: performing a WLAN connection procedure including authentication processing required for a WLAN connection for detected WLAN access point, in response to the user terminal detecting the WLAN access point corresponding to the identifier; and notifying the network apparatus of report information relating to the detected WLAN access point, in response to failure of the authentication processing in the WLAN connection procedure.

### [Embodiment]

Hereinafter, an embodiment of a case where a cellular communication system (LTE system) configured in compliance with the 3GPP standard is interworked with a wireless LAN (WLAN) system will be described with reference to the drawings.

### (System Configuration)

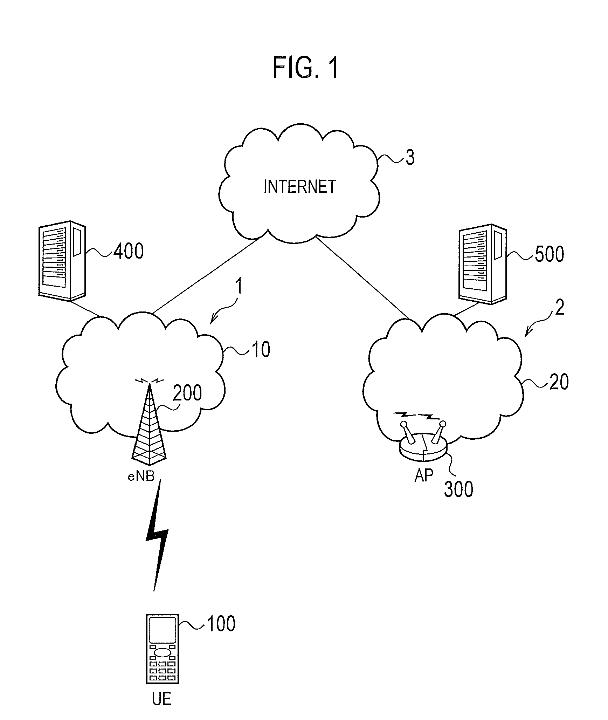

Fig. 1 is a diagram of the configuration of a system according to an embodiment.

As illustrated in Fig. 1, a cellular communication system includes an eNB 200. The eNB 200 corresponds to a cellular base station. The eNB 200 manages one cell or a plurality of cells and performs radio communication with a UE 100 that has established a connection with its own cell. Here, the "cell" is used not only as a term representing a minimum unit of a radio communication area but also as a term representing a function for performing radio communication with the UE 100. The eNB 200, for example, has a radio resource management (RRM) function, a user data rooting function, and a measurement control function for mobility control and scheduling.

The UE 100 is a radio communication apparatus of a mobile type and performs radio communication with a cell with which a connection has been established. The UE 100 corresponds to a user terminal. The UE 100 is a terminal (dual terminal) supporting both communication systems of the cellular communication and the WLAN communication.

The eNB 200 configures a cellular RAN that is one type of access network. In the LTE, the cellular RAN is called an E-UTRAN (Evolved Universal Terrestrial Radio Access Network).

The eNB 200 is connected to a cellular-side core network 10. The cellular-side core network 10 includes MME/S-GW. The MME is a network node performing various mobility control processes and the like for the UE 100 and corresponds to a control station. The S-GW is a network node performing transmission control of user data and corresponds to an exchange station. The cellular-side core network 10 is connected to the Internet 3. The eNB 200 (E-UTRAN) and the cellular-side core network 10 configure a cellular network 1.

A cellular-side server 400 is connected to the cellular-side core network 10. The cellular-side server 400 performs authentication of the UE 100 in the cellular network 1. In addition, the cellular-side server 400 supplies information used for a connection of the UE 100 to the WLAN to the UE 100.

The WLAN system includes a WLAN access point (hereinafter, simply referred to as an "AP") 300. The AP 300 configures a WLAN that is one type of access network. The AP 300, for example, is configured in compliance with IEEE 802.11 standards. The AP 300 is connected to a WLAN-side core network 20. The WLAN-side core network 20 is connected to the Internet 3. The AP 300 (WLAN) and the WLAN-side core network 20 configure a WLAN network 2.

A WLAN-side server 500 is connected to the WLAN-side core network 20. The WLAN-side server 500 performs authentication of the UE 100 in the WLAN network 2.

Next, the configurations of the UE 100, the eNB 200, and the cellular-side server 400 will be described.

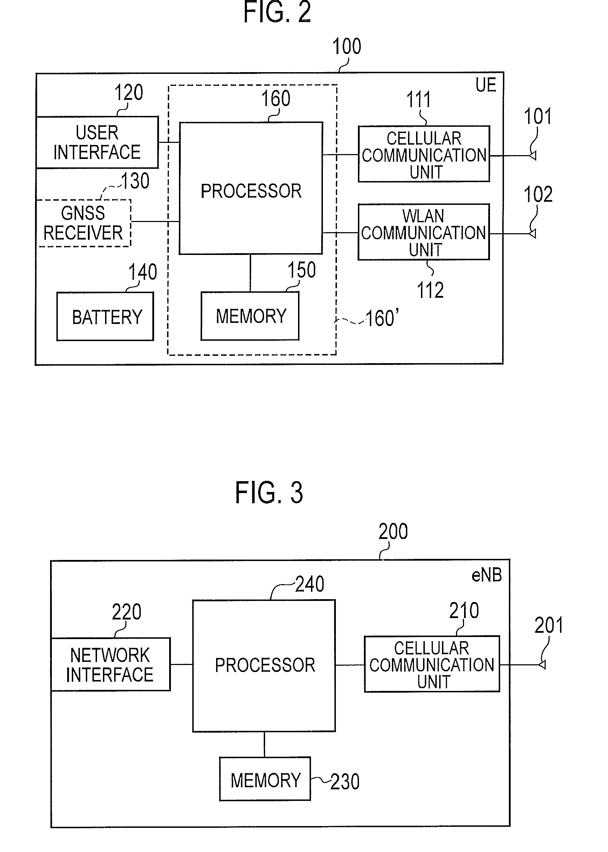

Fig. 2 is a block diagram of the UE 100. As illustrated in Fig. 2, the UE 100 includes: antennas 101 and 102; a cellular communication unit 111; a WLAN communication unit 112; a user interface 120; a GNSS (Global Navigation Satellite System) receiver 130; a battery 140; a memory 150; and a processor 160. The memory 150 and the processor 160 configure a controller. The UE 100 may be configured not to include the GNSS receiver 130. In addition, the memory 150 and the processor 160 may be integrated together, and this set (in other words, a chip set) may be configured as a processor 160'.

The antenna 101 and the cellular communication unit 111 are used for transmission and reception of cellular radio signals. The cellular communication unit 111 converts a baseband signal output by the processor 160 into a cellular radio signal and transmits the cellular radio signal from the antenna 101. In addition, the cellular communication unit 111 converts a cellular radio signal received by the antenna 101 into a baseband signal and outputs the baseband signal to the processor 160.

The antenna 102 and the WLAN communication unit 112 are used for transmission and reception of WLAN radio signals. The WLAN communication unit 112 converts a baseband signal output by the processor 160 into a WLAN radio signal and transmits the WLAN radio signal from the antenna 102. In addition, the WLAN communication unit 112 converts a WLAN radio signal received by the antenna 102 into a baseband signal and outputs the baseband signal to the processor 160.

The user interface 120 is an interface with a user holding the UE 100 and, for example, includes a display, a microphone, a speaker, various buttons, and the like. The user interface 120 receives an input from the user and outputs a signal representing the content of the input to the processor 160. In order to acquire location information representing the geographical location of the UE 100, the GNSS receiver 130 receives a GNSS signal and outputs the received signal to the processor 160. The battery 140 stores power to be supplied to each block of the UE 100.

The memory 150 stores programs executed by the processor 160 and information used for a process performed by the processor 160. The processor 160 includes: a baseband processor that performs modulation/demodulation, coding/decoding, and the like of a baseband signal; and a CPU that performs various processes by executing programs stored in the memory 150. The processor 160 may further include a codec performing coding/decoding of audio/video signals. The processor 160 performs various processes and various communication protocols to be described later.

Fig. 3 is a block diagram of the eNB 200. As illustrated in Fig. 3, the eNB 200 includes: an antenna 201; a cellular communication unit 210; a network interface 220; a memory 230; and a processor 240. The memory 230 and the processor 240 configure a controller.

The antenna 201 and the cellular communication unit 210 are used for transmission and reception of cellular radio signals. The cellular communication unit 210 converts a baseband signal output by the processor 240 into a cellular radio signal and transmits the cellular radio signal from the antenna 201. In addition, the cellular communication unit 210 converts a cellular radio signal received by the antenna 201 into a baseband signal and outputs the baseband signal to the processor 240.

The network interface 220 is connected to a neighboring eNB though an X2 interface and is connected to the MME/S-GW through an S1 interface.

The memory 230 stores programs executed by the processor 240 and information used for a process performed by the processor 240. The processor 240 includes: a baseband processor that performs modulation/demodulation, coding/decoding, and the like of a baseband signal; and a CPU that performs various processes by executing programs stored in the memory 230. The processor 240 performs various processes and various communication protocols to be described later.

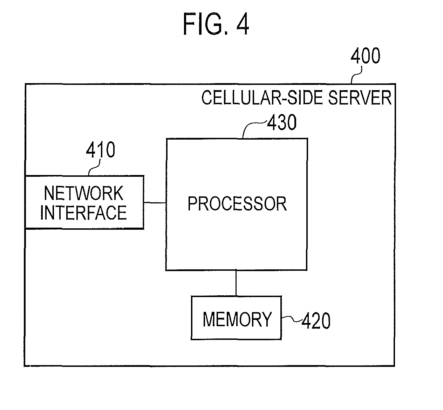

Fig. 4 is a block diagram of the cellular-side server 400. As illustrated in Fig. 4, the cellular-side server 400 includes: a network interface 410; a memory 420; and a processor 430. The memory 420 corresponds to a storage unit. The processor 430 and the memory 420 configure a controller.

The network interface 410 is connected to the cellular-side core network 10. The memory 420 stores programs executed by the processor 430 and information used for a process performed by the processor 430. The processor 430 performs various processes by executing programs stored in the memory 420. The processor 430 performs various processes to be described later.

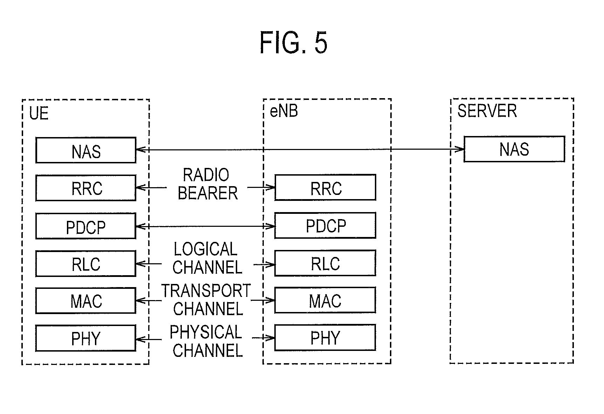

Fig. 5 is a diagram of a protocol stack of a radio interface in LTE. As illustrated in Fig 5, the radio interface protocol is divided into first to third layers of the OSI reference model, and the first layer is a physical (PHY) layer. The second layer includes: a MAC (Medium Access Control) layer, an RLC (Radio Link Control) layer, and a PDCP (Packet Data Convergence Protocol) layer. The third layer includes an RRC (Radio Resource Control) layer.

The physical layer performs coding/decoding, modulation/demodulation, antenna mapping/demapping, and resource mapping/demapping. Between the physical layer of the UE 100 and the physical layer of the eNB 200, user data and a control signal are transmitted through a physical channel.

The MAC layer performs data priority control, a retransmission process according to a hybrid ARQ (HARQ), and the like. Between the MAC layer of the UE 100 and the MAC layer of the eNB 200, user data and a control signal are transmitted through a transport channel. The MAC layer of the eNB 200 includes a scheduler that determines the transport format (a transport block size and a modulation/coding system) of up and down links and resource blocks assigned to the UE 100.

The RLC layer transmits data to the RLC layer of the reception side by using the functions of the MAC layer and the physical layer. Between the RLC layer of the UE 100 and the RLC layer of the eNB 200, user data and a control signal are transmitted through a logical channel.

The PDCP layer performs header compression/decompression and encryption/decryption.

The RRC layer is defined only in a control frame handling a control signal. The RRC layer of the UE 100 and the RRC layer of the eNB 200, control signals (RRC message) used for various settings are transmitted. The RRC layer controls a logical channel, a transport channel, and a physical channel in accordance with establishment, reestablishment, and release of a radio bearer. In a case where there is a connection (RRC connection) between the RRC of the UE 100 and the RRC of the eNB 200, the UE 100 is in a connected state. Otherwise, the UE 100 is in an idle state.

A NAS (Non-Access Stratum) layer positioned above the RRC layer performs session management, mobility management, and the like. The cellular-side server 400 transmits/receives a NAS message to/from the UE 100.

### (Traffic Steering)

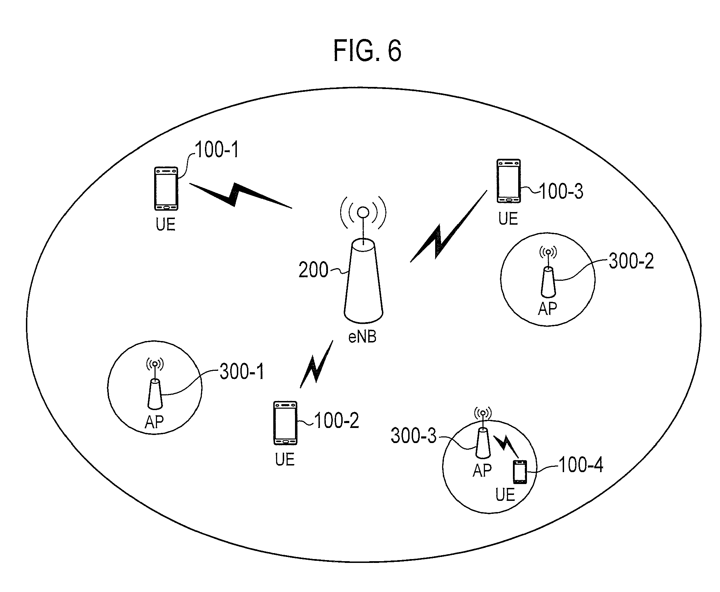

Fig. 6 is a diagram illustrating traffic steering.

As illustrated in Fig. 6, in the cell of an eNB 200, a plurality of APs 300 are disposed. Each AP 300, for example, is an AP (Operator controlled AP) that is managed by an operator of the cellular communication system.

A plurality of UEs 100 exist in the cell of the eNB 200. The UE 100 may establish a connection with the eNB 200 and perform cellular communication with the eNB 200. In such a case, the UE 100 transmits/receives a cellular radio signal including traffic (user data) to/from the eNB 200.

In such an operation environment, through traffic steering performing switching such that the traffic of the UE 100, which has been received by the eNB 200 (E-UTRAN), is received by the AP 300 (WLAN), the traffic load of the eNB 200 (E-UTRAN) can be decreased (off-load).

In the traffic steering, there are a case where the connection destination of the UE 100 is switched between the eNB 200 and the AP 300 and a case where a data path is switched between the eNB 200 and the AP 300 while the UE 100 is connected to both the eNB 200 and the AP 300.

In an embodiment, in order to perform traffic steering of the UE 100 from the eNB 200 to the AP 300, information (hereinafter, referred to as "AP information") used for a connection to the AP 300 is supplied from the cellular-side server 400 to the UE 100. More specifically, the cellular-side server 400 manages the AP information of the AP 300 (for example, an Operator controlled AP) that can be trusted and supplies the managed AP information to the UE 100.

The AP information includes an identifier and WLAN authentication information of the AP 300 that can be trusted. The identifier of the AP 300, for example, is an SSID (Service Set Identifier) or an ESSID (Extended Service Set Identifier). The identifier of the AP 300 may include a MAC address. The WLAN authentication information, for example, is an authentication key.

### (Communication Control Method according to Embodiment)

Next, a communication control method according to an embodiment will be described.

### (1) Overview of Communication Control Method

Differently from the eNB 200, an AP 300 can be installed relatively freely, and thus, there is concern that a "spoofing AP" is installed for intercepting a communication content of the UE 100. The "spoofing AP", for example, is an AP 300 to which the same AP identifier as the AP identifier of the operator controlled AP is set. It is not desirable to leave a "spoofing AP" from the viewpoint of securing the confidentiality of communication.

Thus, the communication control method according to the embodiment includes: Step A in which the UE 100 acquires the identifier of an AP 300 that can be trusted from the cellular-side server 400; Step B in which, in a case where the AP 300 corresponding to the identifier is detected, the UE 100 performs a WLAN connection procedure including an authentication process required for a WLAN connection for the detected AP 300; and Step C in which, in a case where the authentication process fails in the WLAN connection procedure, report information relating to the detected AP 300 is notified from the UE 100 to the cellular-side server 400.

Here, although an AP 300 has the same identifier as that of the AP 300 that can be trusted, the AP 300 for which the authentication process of the UE 100 fails can be determined as a "spoofing AP". Thus, by notifying the report information relating to such an AP 300 from the UE 100 to the cellular-side server 400, the existence of the "spoofing AP" can be checked.

In the embodiment, in Step A, the UE 100 further acquires the WLAN authentication information used for the authentication process from the cellular-side server 400. In Step B, the UE 100 uses the WLAN authentication information acquired from the cellular-side server 400 for the authentication process.

Accordingly, establishment of a connection with a "spoofing AP" can be prevented, and a "spoofing AP" can be configured to be detectable.

In the embodiment, the cellular-side server 400 manages information (AP information) relating to the AP 300 that can be trusted. The communication control method further includes Step D in which the cellular-side server 400 that has received the report information updates the managed information based on the received report information. In Step D, the cellular-side server 400, for example, updates the managed information such that the detected AP 300 is excluded.

Accordingly, since the AP information of the "spoofing AP" is not supplied from the cellular-side server 400 to the UE 100, it can be prevented that the UE 100 performs the sequence of a WLAN connection with the "spoofing AP".

In the embodiment, the report information includes at least one of the identifier of the AP ("spoofing AP") 300 detected by the UE 100, the WLAN authentication information used for the authentication process for the detected AP 300, and an authentication scheme used for the authentication process for the detected AP 300. In addition, the report information may further include at least one of location information relating to the geographical location of the detected AP 300 and time information relating to authentication failure time for the detected AP 300. In such a case, the cellular network 1 can acquire details of the "spoofing AP".

### (2) Operation Sequence

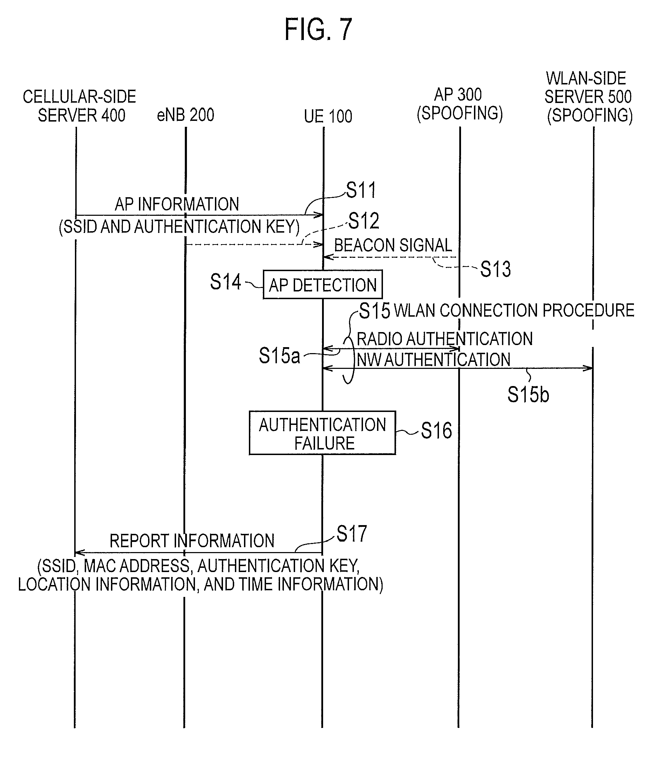

Fig. 7 is a diagram illustrating the operation sequence according to an embodiment. In the initial state of Fig. 7, a UE 100 is in the state of having an established connection with a cellular network 1. Here, a case will be considered in which the AP 300 and the WLAN-side server 500 are spoofing.

As illustrated in Fig. 7, in Step S11, the cellular-side server 400 supplies the AP information of the AP 300 that can be trusted to the UE 100. The AP information includes the identifier (for example, an SSID) of the AP 300 that can be trusted and the WLAN authentication information (for example, an authentication key). The UE 100 stores the supplied AP information.

In Step S12, the eNB 200 transmits RAN level information used for selecting a network to the UE 100. The RAN level information is a network selection rule, parameters applied to the network selection rule, a WLAN measurement instruction, and the like. The UE 100 performs WLAN measurement (scanning) based on the AP information and the RAN level information. For example, the reception of a beacon signal including the AP identifier included in the AP information is tried.

In Step S13, the UE 100 receives a beacon signal transmitted from the AP 300. In a case where an AP identifier included in the received beacon signal coincides with the AP identifier included in the AP information, the UE 100 determines that the AP 300 that can be trusted is detected (Step S14).

In Step S15, the UE 100 performs a WLAN connection procedure including an authentication process required for a WLAN connection for the detected AP 300. The WLAN connection procedure includes radio authentication (Step S15a) that is authentication between the UE 100 and the AP 300 and network authentication (Step S15b) that is authentication between the UE 100 and the WLAN-side server 500. In a case where the radio authentication is performed using the AP identifier (SSID), while the radio authentication is successful, the network authentication fails, and accordingly, the UE 100 determines an authentication failure (Step S16).

The UE 100 determining the authentication failure generates report information relating to the AP 300 for which the authentication has failed. As described above, the report information includes at least one of the identifier of the AP ("spoofing AP") 300 detected by the UE 100, the WLAN authentication information used in the authentication process for the detected AP 300, and an authentication scheme used for the authentication process for the detected AP 300. In addition, the report information may further include at least one of the location information relating to the geographical location of the detected AP 300 and the time information relating to authentication failure time for the detected AP 300.

In Step S17, the UE 100 transmits the report information to the cellular-side server 400. Here, in a case where a connection with the cellular network 1 is maintained, the UE 100 immediately notifies the report information to the cellular-side server 400.

In addition, at the time of an authentication failure, there are also cases where the UE 100 is in a state (idle state) in which there is no connection with the cellular network 1. In such cases, the UE 100 maintains the report information without any notification thereof. Then, after being connected to the cellular network 1, the UE 100 notifies the maintained report information to the cellular-side server 400.

The cellular-side server 400 that has received the report information from the UE 100 updates the managed AP information such that the AP 300 ("spoofing AP) represented in the report information is excluded.

Alternatively, the cellular-side server 400 may present the information of the "spoofing AP" to an operator by displaying the content of the report information. Here, in a case where the location information is included in the report information, the operator can specify the location of the "spoofing AP" and perform a countermeasure such as removal of the "spoofing AP".

Alternatively, the cellular-side server 400 or the operator may perform setting change for changing the AP identifier of a true AP (for example, an Operator controlled AP) having the same AP identifier as that of the "spoofing AP".

### (Conclusion of Embodiment)

As described above, the communication control method according to the embodiment includes: Step A in which the UE 100 acquires the identifier of an AP 300 that can be trusted from the cellular-side server 400; Step B in which, in a case where the AP 300 corresponding to the identifier is detected, the UE 100 performs a WLAN connection procedure including an authentication process required for a WLAN connection for the detected AP 300; and Step C in which, in a case where the authentication process fails in the WLAN connection procedure, report information relating to the detected AP 300 is notified from the UE 100 to the cellular-side server 400. Accordingly, the existence of a "spoofing AP" in the cellular network 1 can be checked.

### [Other Embodiment]

In the embodiment described above, the AP information is supplied from the cellular-side server 400 to the UE 100, and the UE 100 notifies the report information to the cellular-side server 400. In other words, a "network apparatus" is the cellular-side server 400. However, it may be configured such that the AP information is supplied from the eNB 200 to the UE 100, and the UE 100 notifies the report information to the eNB 200. In such a case, the "network apparatus" is not the cellular-side server 400 but the eNB 200.

In addition, in the embodiment described above, while the LTE system has been described as an example of the cellular communication system, the cellular communication system is not limited to the LTE system, but the present invention may be applied to a system other than the LTE system.

The disclosure of Japanese Patent Application No. 2013-242927 (filed on Nov. 25, 2013) is incorporated by reference herein in its entirety.

### INDUSTRIAL APPLICABILITY

According to the present invention, confidentiality of communication can be secured even in a case where a cellular RAN is interworked with a WLAN.

## Claims

1. A communication control method, comprising:
a step A in which a user terminal acquires an identifier of a WLAN access point that can be trusted, from a network apparatus of a cellular network;
a step B in which the user terminal performs a WLAN connection procedure including authentication processing required for a WLAN connection for detected WLAN access point, in response to the user terminal detecting the WLAN access point corresponding to the identifier; and
a step C in which the user terminal notifies the network apparatus of report information relating to the detected WLAN access point, in response to failure of the authentication processing in the WLAN connection procedure.

2. The communication control method according to claim 1, wherein
in the step A, the user terminal further acquires WLAN authentication information used in the authentication processing, from the network apparatus, and
in the step B, the user terminal uses the WLAN authentication information acquired from the network apparatus for the authentication processing.

3. The communication control method according to claim 1, wherein
the network apparatus manages information relating to the WLAN access point that can be trusted,
the communication control method further comprising:
a step D in which the network apparatus receiving the report information updates the managed information based on the received report information.

4. The communication control method according to claim 3, wherein
in the step D, the network apparatus updates the managed information to exclude the detected WLAN access point.

5. The communication control method according to claim 1, wherein
the report information includes at least one of an identifier of the detected WLAN access point, WLAN authentication information used in the authentication processing for the detected WLAN access point, and an authentication scheme used for the authentication processing for the detected WLAN access point.

6. The communication control method according to claim 5, wherein
the report information further includes at least one of location information relating to a geographical location of the detected WLAN access point and time information relating to authentication failure time for the detected WLAN access point.

7. The communication control method according to claim 1, wherein
the step C includes
a step C1 in which the user terminal that does not have a connection with the cellular network stores the report information at the time of an authentication failure for the detected WLAN access point, and
a step C2 in which the user terminal notifies the network apparatus of the stored report information after the user terminal connects to the cellular network.

8. A user terminal, comprising:
a controller configured to acquire an identifier of a WLAN access point that can be trusted, from a network apparatus of a cellular network, wherein
the controller performs a WLAN connection procedure including authentication processing required for a WLAN connection for detected WLAN access point in response to the controller detecting the WLAN access point corresponding to the identifier, and
the controller notifies the network apparatus of report information relating to the detected WLAN access point in response to failure of the authentication processing in the WLAN connection procedure.

9. A processor to be equipped in a user terminal configured to acquire an identifier of a WLAN access point that can be trusted from a network apparatus of a cellular network, the processor configured to perform the processes of:
performing a WLAN connection procedure including authentication processing required for a WLAN connection for detected WLAN access point, in response to the user terminal detecting the WLAN access point corresponding to the identifier; and
notifying the network apparatus of report information relating to the detected WLAN access point, in response to failure of the authentication processing in the WLAN connection procedure.
